# FASCICULE DE BREVET EUROPEEN

(11) **EP 2 735 512 B1**
(45) Date de publication et mention de la délivrance du brevet: **18.01.2017**
(21) Numéro de dépôt: 13005126.1
(22) Date de dépôt: 29.10.2013
(51) Int. Cl.: B64D 35/08, B64C 27/14, B64D 31/06

(54) **PROCÉDÉ ET AÉRONEF À VOILURE TOURNANTE MUNI DE TROIS MOTEURS**
VERFAHREN UND HUBSCHRAUBER MIT DREI TRIEBWERKEN
METHOD AND ROTARY-WING AIRCRAFT PROVIDED WITH THREE ENGINES

(30) Priorité: 26.11.2012 FR 1203181
(43) Date de publication de la demande: 28.05.2014
(73) Titulaire: Airbus Helicopters, 13725 Marignane Cedex (FR)
(72) Inventeur: Gomez, Nayibe, 13100 Aix-en-Provence (FR)
(74) Mandataire: GPI & Associés

(56) Documents cités:
- FR-A1- 2 933 910
- US-A- 3 963 372
- US-A1- 2009 186 320

## Description

La présente invention concerne un aéronef à voilure tournante muni de trois moteurs, et un procédé de contrôle de cet aéronef.

Il est à noter que l'on entend par moteur une unité motrice participant à la propulsion et/ ou à la sustentation d'un aéronef. Sur un appareil muni d'une voilure tournante, on appelle « moteur » une unité motrice mettant en rotation une boîte de transmission de puissance qui entraîne en rotation au moins un rotor de la voilure tournante.

Un aéronef est parfois équipé d'une unité motrice auxiliaire parfois connue sous l'acronyme APU (« auxiliaire power unit » en langue anglaise). Cette unité motrice auxiliaire peut être par exemple utilisée pour générer de l'énergie électrique, pour entraîner des systèmes hydrauliques, voire pour participer au démarrage d'un moteur. Par contre, l'unité motrice auxiliaire n'entraîne pas une boîte de transmission de puissance d'un rotor sur un aéronef à voilure tournante.

Par conséquent, l'unité motrice auxiliaire d'un aéronef ne représente pas un moteur au sens de l'invention.

Cette invention s'inscrit alors dans le domaine de l'installation motrice des aéronefs à voilures tournantes, tels que des hélicoptères par exemple.

En effet, le niveau de puissance d'un moteur est par construction limité. Dès lors, lorsque la puissance d'un unique moteur s'avère insuffisante, les constructeurs agencent naturellement une pluralité de moteurs sur les aéronefs.

Installer un nombre plus important de moteurs sur des avions fournit de plus une opportunité d'amélioration de la sécurité de ces avions. Les avions quadrimoteurs représentent d'ailleurs un concept intéressant pour des misions spécifiques de traversées océaniques ou pour un décollage/ atterrissage sur une piste courte.

Toutefois, afin de réduire la complexité et les coûts de mise en oeuvre, la tendance moderne est de réduire le nombre de moteurs tout en accomplissant les mêmes types de missions.

Cette tendance est identique pour les aéronefs munis d'une voilure tournante.

Par exemple, des aéronefs trimoteur sont apparus dans les années 1960, à cause du manque de puissance des moteurs disponibles à cette époque sur des aéronefs présentant un tonnage important.

Dans cette catégorie, les aéronefs à voilure tournante trimoteur restent encore intéressants pour répondre aux croissantes exigences des opérateurs vis-à-vis de la sécurité. Ces exigences visent notamment à assurer une trajectoire sûre quel que soit l'instant ou survient une panne d'un moteur. Concrètement, le souhait de certains operateurs est de pouvoir continuer à rester en vol stationnaire avec ces aéronefs à voilure tournante lourds même si un moteur est en panne.

Les aéronefs à voilure tournante trimoteur sont équipés de trois moteurs identiques. On appelle « moteurs identiques » des moteurs ayant des caractéristiques d'entraînement identiques d'un organe rotatif.

A l'inverse, on appelle « moteurs inégaux » des moteurs ayant des caractéristiques d'entraînement distinctes, à savoir des moteurs générant des puissances maximales différentes, et/ou des couples maximaux inégaux, et/ou des vitesses de rotation maximales d'un arbre de sortie différentes. Ainsi deux moteurs inégaux peuvent correspondre respectivement à un moteur entraînant un arbre de sortie à plusieurs dizaines de milliers de tours par minute, et à un moteur entraînant un arbre de sortie à moins de dix milles tours par minute.

L'installation de plusieurs moteurs identiques était imposée afin d'assurer la réactivité en cas de panne d'un moteur ainsi que pour simplifier l'installation et l'intégration du moteur. Il reste toutefois toujours possible d'installer des moteurs à puissances maximales inégales afin de répondre aux exigences de sécurité ou afin de pallier le manque de puissance des moteurs disponibles sur le marché.

Cependant, les défis techniques à résoudre ont empêché d'industrialiser une architecture d'hélicoptère trimoteur avec par exemple au moins un moteur à puissance maximale différente des autres.

Pour concevoir un aéronef à voilure tournante trimoteur équipé de moteurs identiques, un constructeur doit surmonter principalement les défis techniques exposés ci-après.

Ainsi, les moteurs doivent être surdimensionnés pour répondre à des exigences de sécurité de manière à fournir un surcroit de puissance dans les cas de panne d'un moteur. Des régimes d'urgence connus sous l'acronyme « OEI » (« One Engine Inoperative » en langue anglaise) sont implémentés. Le dimensionnement pour ces surpuissances est très pénalisant et incompatible d'une optimisation du moteur en termes de masse, de coût, de consommation carburant et d'émission (bruit, CO2... ) notamment. La certification de ces moteurs est de plus rendu très compliquée car elle engendre des essais supplémentaires tels que des essais de « sur-température » ou d'endurances spécifiques.

Par ailleurs, les moteurs doivent être régulés lors de leur utilisation.

On connaît donc des aéronefs munis uniquement de moteurs régulés en fonction d'une consigne constante.

De manière alternative et selon les techniques actuelles, un aéronef multimoteur comporte uniquement des moteurs régulés par rapport à une consigne variable. Par exemple, les moteurs sont régulés par rapport à une consigne de rotation d'une turbine libre, variant en fonction de la puissance à fournir ou encore de la masse spécifique de l'air notamment.

Les moteurs coopèrent alors généralement avec une unité de contrôle connue sous les acronymes ECU (« engine control unit » en langue anglaise), ou FADEC (« Full authority digital engine control » ou « Full authority digital electronic control » en langue anglaise).

L'unité de contrôle d'un moteur dialogue classiquement avec les autres unités de contrôle. Les moteurs sont alors régulés en fonction d'une même consigne variable.

La consigne de régulation des moteurs varie notamment pour éviter une survitesse de rotation de la voilure tournante ou d'un moteur.

En effet, la puissance nécessaire au sol est inférieure à la puissance nécessaire pour décoller. Dès lors, les unités de contrôle limitent par exemple les performances des moteurs pour éviter une survitesse de la voilure tournante.

A l'inverse, durant un vol stationnaire, il convient d'éviter une survitesse des moteurs.

Dès lors, l'intégration de trois moteurs peut impliquer des unités de contrôle de dimensions et de masses importantes. Par rapport à un aéronef bimoteur, le nombre d'entrées/sorties de l'unité de contrôle peut être significativement augmenté, et une harmonisation du dialogue entre équipements doit être assurée.

En outre, les systèmes de contrôle d'un aéronef et les moteurs peuvent exciter des modes propres en vibration de l'aéronef à voilure tournante. La complexité de la mise au point de la stabilité torsionelle de la chaîne cinématique de transmission de puissance de l'aéronef augmente avec le nombre d'éléments contribuant à la chaîne cinématique globale, et donc avec le nombre de moteurs installés.

Le bon compromis entre la réactivité d'un moteur après une commande du pilote, et la stabilité de l'aéronef représente aussi un défi important à relever. En effet, si les moteurs sont très réactifs, une commande rapide d'un pilote risque d'entraîner l'excitation d'un mode propre en vibrations de l'aéronef. La mise au point d'un aéronef bimoteur étant délicate, on comprend que la mise au point d'un aéronef muni de trois moteurs réactifs l'est d'autant plus.

Afin d'optimiser le point de fonctionnement des moteurs, une installation des moteurs à puissances maximales inégales peut être envisagée.

Pour un fonctionnement bimoteur, cette installation et ces bénéfices sont expliqués dans le document WO 2012/059671A2.

Installer des moteurs à puissances maximales inégales implique cependant des défis techniques importants. Dès lors, cette solution semble difficile à implémenter sur un aéronef trimoteur.

La réactivité d'un tel aéronef peut notamment être difficile à optimiser.

Par exemple, les moteurs sont équilibrés sur un hélicoptère conventionnel afin que les puissances fournies par chaque moteur soient identiques.

Pour un moteur à régulation proportionnelle pure, l'équilibrage en puissance de ce moteur (« Load sharing » en langue anglaise) est assuré par une relation prédéfinie liant la vitesse de rotation d'un générateur de gaz du moteur et la vitesse de rotation d'un rotor de sustentation et de propulsion de l'hélicoptère. Pour un moteur à régulation proportionnelle intégrale prenant en compte des paramètres de puissance (vitesse de rotation d'un générateur de gaz NG, température TOT ou encore le couple TRQ) des autres moteurs dans la boucle de régulation, l'équilibrage en puissance est assuré par une unité de contrôle.

La réactivité d'un aéronef muni de moteurs développant des puissances égales peut être meilleure que pour un aéronef muni de moteurs développant des puissances inégales.

En effet, sur un aéronef muni de deux moteurs développant des puissances égales, chaque moteur fournit la moitié de la puissance requise. Si un moteur tombe en panne, il convient donc d'accélérer l'autre moteur pour obtenir un gain de puissance égal à la moitié de la puissance requise.

Par contre, si les moteurs sont à puissances maximales inégales, la perte du moteur le plus puissant devrait être compensée le plus rapidement possible par le moteur à puissance la plus faible. Ce moteur à puissance la plus faible devra être accéléré pour un gain de puissance supérieure à la moitié de la puissance requise compte tenu du déséquilibre.

Par ailleurs, le contrôle de l'aéronef peut être délicat dans de telles conditions.

Dans le cas d'un hélicoptère conventionnel, les moteurs sont régulés à la même vitesse de rotation d'une turbine libre NTL qui est variable et proportionnelle à la vitesse de rotation NR du rotor de sustentation. Comme expliqué précédemment, ils sont aussi régulés pour fournir une puissance identique.

Si les moteurs sont à puissances maximales inégales, une nouvelle logique de contrôle sans l'équilibre de puissance paraît délicate à développer pour gérer la puissance globale à fournir (la puissance disponible de chacun de moteurs, ses limitations, la puissance nécessaire, etc).

De plus, les moteurs ne possédant pas une puissance maximale identique, leur vitesse de rotation peut être différente, et constituer une autre difficulté. Cette gestion de puissance peut être encore plus complexe si on décide d'arrêter un moteur afin d'optimiser la consommation de carburant.

La stabilité de l'aéronef est d'autant plus problématique en présence de trois moteurs à puissance maximale inégale.

Les comportements dynamiques de moteurs ayant des puissances maximales différentes peuvent être différents. Or, les informations relatives au fonctionnement des moteurs sont échangées entre les unités de contrôle et comparées. Par suite, des moteurs inégaux peuvent être soumis à des accélérations dissymétriques induisant de fausses alarmes de pannes transitoires.

La stabilité torsionnelle de la chaîne cinématique de transmission de puissance de l'aéronef peut aussi représenter un problème difficile à surmonter.

Par ailleurs, la surveillance des moteurs peut être délicate à réaliser, des moteurs inégaux étant difficilement comparables les uns aux autres.

En outre, un constructeur d'aéronef peut éventuellement contacter des motoristes différents pour réaliser les moteurs d'un aéronef, d'autant plus lorsque les moteurs sont inégaux.

Il peut par exemple en résulter des difficultés d'harmonisation des interfaces entre les moteurs, ou entre les moteurs et le reste de l'aéronef.

On comprend donc que la mise en oeuvre d'un aéronef trimoteur peut être intéressante.

Toutefois, l'implémentation de trois moteurs identiques peut induire des difficultés de dimensionnement des moteurs et de leurs unités de contrôle, ainsi que des problèmes de stabilité.

L'implémentation de moteurs inégaux semble encore plus délicate en entraînant des problèmes de réactivité, de contrôle, de stabilité, de surveillance, voire d'intégration.

Indépendamment de la variante, la réalisation d'un aéronef trimoteur entraîne donc des difficultés diverses. Ces difficultés rendent la réalisation d'un aéronef trimoteur non évidente, un aéronef trimoteur n'étant pas un simple aéronef bimoteur muni d'un troisième moteur.

Parmi l'arrière plan technologique, on connaît le document US 4,479,619 qui propose un système de transmission de puissance pour des hélicoptères trimoteur.

Cette solution propose également l'alternative de débrayage d'un moteur sur trois.

L'hélicoptère Super-Frelon possédait également trois moteurs identiques (sans embrayage).

Le document US 3,963,372 propose une solution de management de la puissance et de contrôle des moteurs pour des hélicoptères trimoteur. Une unité centrale contrôle les moteurs pour égaliser la puissance de sortie des moteurs.

Pour pallier la problématique des moteurs conçus de manière surdimensionnée, une installation des moteurs à puissances maximales inégales, dans le cas des aéronefs bimoteur, a déjà été envisagée par le passé. C'est le cas du document WO2012/059671A2 qui propose deux moteurs à puissances maximales inégales.

Ce document WO2012/059671A2 traite seulement le cas des aéronefs bimoteur et ne présente pas des solutions aux problématiques de contrôle ou de stabilité.

Le document FR 2 933 910 décrit une installation motrice comprenant au moins un turbomoteur et au moins un moteur électrique.

Le document US 2009/186320 décrit trois moteurs contrôlés par des organes (FADEC) qui sont reliés entre eux et à un organe de commande dénommé « flight control computer FCC »

La présente invention a alors pour objet de proposer un aéronef innovant à voilure tournante muni de trois moteurs, pour par exemple pouvoir rester en vol stationnaire même si un moteur est en panne.

Selon l'invention, un aéronef est muni d'une voilure tournante et d'au moins une boîte de transmission de puissance pour l'entraînement en rotation de cette voilure tournante. De plus, l'aéronef comporte un premier moteur principal et un deuxième moteur principal destinés à mettre en mouvement la boîte de transmission de puissance, l'aéronef étant pourvu d'un système principal de régulation régulant le premier moteur principal et le deuxième moteur principal selon une consigne variable.

Cet aéronef est de plus muni d'un moteur secondaire mettant en mouvement la boîte de transmission de puissance, cet aéronef ayant un système secondaire de régulation qui régule le moteur secondaire selon une consigne constante, le système secondaire de régulation étant indépendant dudit système principal de régulation.

Par rapport à un aéronef bimoteur, l'invention présente l'avantage d'offrir un surcroît de puissance. En cas de panne d'un moteur principal, l'installation motrice peut néanmoins offrir une puissance relativement importante pour sécuriser le vol de cet aéronef.

Lorsqu'un moteur principal tombe en panne, il est par exemple possible d'obtenir avec l'invention, une puissance sensiblement équivalente à la puissance obtenue sur un aéronef bimoteur conventionnel fonctionnant à un régime de fonctionnement continu PMC.

En outre, le surcroît de puissance fourni par le moteur secondaire peut éventuellement éviter un surdimensionnement des moteurs principaux, pour notamment effectuer un vol en stationnaire même si un moteur principal est en panne.

Un hélicoptère bimoteur inclut souvent trois régimes d'urgence connus sous les acronymes OEI, OEI 2', OEI 30" associés à des puissances élevées. L'invention peut éventuellement permettre d'implémenter uniquement un régime d'urgence et évite ainsi un surdimensionnement pénalisant.

En outre, cet aéronef innovant peut permettre de lever à minima certains des inconvénients relevés précédemment.

En effet, les deux moteurs principaux et le moteur secondaire sont pilotés différemment quelle que soit la phase de vol. Le moteur secondaire est régulé selon un objectif constant, dans la limite du domaine de vol de l'hélicoptère, quelle que soit la masse volumique de l'air et quelle que soit la demande de puissance nécessaire générée par le pilote à travers le mouvement des commandes de vol.

Ce moteur secondaire peut être un moteur électrique ou thermique.

Dès lors et en l'absence d'un objectif de régulation variable, le moteur secondaire a pour fonction de réduire la puissance nécessaire à fournir par les moteurs principaux pour répondre aux besoins de la voilure tournante. On verra que le moteur secondaire fournit soit un unique niveau de puissance lors d'une régulation à puissance fixe, soit une puissance sensiblement constante lors d'une régulation à débit de carburant fixe par exemple.

Dès lors, les moteurs principaux apportent le supplément de puissance requis pour répondre aux besoins de la voilure tournante.

Si nécessaire, les moteurs principaux peuvent être régulés pour ne fournir aucune puissance. A cet effet notamment, les moteurs principaux sont donc pilotés selon un objectif de régulation variable.

Ces deux moteurs principaux peuvent donc fonctionner de la même manière que les moteurs d'un aéronef bimoteur classique. Le système principal de régulation régule alors éventuellement la vitesse de la turbine libre NTL de ces moteurs principaux en fonction d'une consigne variable donnée par un système avionique de l'aéronef.

De plus, le système principal de régulation peut réguler un moteur principal par rapport à l'autre moteur principal. Par exemple, les moteurs principaux peuvent être équilibrés pour présenter une différence de 5% maximum entre la vitesse de rotation de leurs générateurs de gaz, et une différence de 15% maximum entre les couples transmis par ces moteurs principaux.

Par contre, il n'y a pas d'échange d'informations de puissance entre le moteur secondaire et les moteurs principaux pour simplifier le dispositif. De même, les informations d'état et les paramètres de fonctionnement du moteur secondaire ne sont pas nécessairement échangés avec les informations d'état et les paramètres de fonctionnement des moteurs principaux.

Si les moteurs principaux et secondaire sont égaux, l'aéronef correspond à un aéronef à trois moteurs égaux susceptible d'être exposé à des difficultés de dimensionnement des moteurs et de leurs unités de contrôle, ainsi qu'à des problèmes de stabilité.

Cependant, la présence du moteur secondaire peut permettre d'éviter de surdimensionner les moteurs principaux.

En outre, en l'absence de lien entre le système de régulation principal et le système de régulation secondaire, en référence à l'explication précédente, l'aéronef peut être muni d'unités de contrôle ayant des dimensions et des coûts raisonnables, à l'instar d'un aéronef bimoteur.

Par exemple, selon une réalisation, le système principal de régulation comporte une première unité de contrôle principale pour contrôler le premier moteur principal et une deuxième unité de contrôle principale pour contrôler le deuxième moteur principal, la première unité de contrôle communiquant avec la deuxième unité de contrôle. Le système secondaire de régulation comporte alors une unité de contrôle secondaire pour contrôler le moteur secondaire, l'unité de contrôle secondaire pouvant être dépourvue de lien avec les unités de contrôles principales.

Les unités de contrôle principales peuvent être du type FADEC utilisé sur les hélicoptères bimoteur. Le nombre d'entrées et de sorties de ces unités de contrôle reste donc restreint.

Par contre, l'unité de contrôle secondaire peut être plus simple pour répondre à un objectif constant de régulation. Par exemple, l'unité de contrôle secondaire peut être du type hydromécanique.

Selon une autre variante, les unités de contrôle principales et secondaire peuvent toutes être de type FADEC. De façon alternative, les unités de contrôle principales et secondaire peuvent toutes être de type hydromécanique.

Concernant la stabilité de l'aéronef, le moteur secondaire est piloté selon un objectif fixe pouvant restreindre son impact sur la stabilité torsionnelle de la chaîne cinématique de transmission de puissance de l'aéronef.

D'ailleurs, le moteur secondaire peut présenter un temps de réaction en accélération ou en décélération supérieur aux temps de réaction des moteurs principaux.

En effet, le moteur secondaire est régulé selon un objectif constant. Ainsi, une commande brusque du pilote induit une modification du comportement des moteurs principaux, à l'instar d'un aéronef bimoteur, pour répondre à l'ordre d'un pilote ou d'un moyen de pilotage automatique.

Par conséquent, le moteur secondaire peut de manière surprenante posséder une faible réactivité. La réactivité du moteur secondaire peut donc être nettement inférieure à la réactivité des deux autres moteurs. La différence de réactivité entre un moteur principal et le moteur secondaire est éventuellement de l'ordre d'une seconde.

La faible réactivité du moteur secondaire implique que l'impact du moteur secondaire sur la stabilité torsionnelle de la chaîne cinématique de transmission de puissance est limité.

De plus, lorsque le moteur secondaire possède un temps de réaction en accélération ou en décélération supérieur aux temps de réaction des moteurs principaux, la ligne de fonctionnement du moteur secondaire peut alors être adaptée, pour minimiser la consommation d'énergie de ce moteur secondaire. Dans le cadre d'un moteur thermique, la consommation de carburant du moteur secondaire peut ainsi être réduite.

Par ailleurs, les moteurs principaux et secondaire peuvent aussi être inégaux.

Par exemple, les moteurs principaux sont identiques, le moteur secondaire étant différent des moteurs principaux.

Le moteur secondaire peut notamment être de taille différente et de classe de puissance maximale différente des deux moteurs principaux. Le moteur secondaire peut notamment développer une puissance maximale inférieure à la puissance maximale développée par les deux moteurs principaux.

L'aéronef s'expose alors aux problèmes additionnels de temps de réponse en cas de panne d'un moteur, de surveillance, voire d'intégration énoncés précédemment.

Cependant, les deux moteurs principaux peuvent être équilibrés par le système de régulation principal. Le moteur secondaire étant piloté à objectif constant, le temps de réponse de l'installation ne varie pas en fonction du moteur en panne. En effet, ce temps de réponse correspond au temps de réponse d'un moteur principal, quel que soit le moteur en panne.

Concernant la surveillance des moteurs, les informations d'état et les paramètres de fonctionnement du moteur secondaire ne doivent pas nécessairement être échangés avec les moteurs principaux. En effet, la régulation des moteurs principaux est indépendante du moteur secondaire, et inversement.

Par suite, la surveillance de l'installation est facilitée.

Enfin, les moteurs principaux et le moteur secondaire sont finalement indépendants. Le développement des moteurs principaux peut donc être indépendant du développement du moteur secondaire. De plus, il n'est plus nécessaire d'assurer une harmonisation des interfaces des trois moteurs entre eux, même si le moteur secondaire possède une puissance maximale inégale aux puissances maximales des moteurs principaux.

Par ailleurs, que les trois moteurs soient égaux ou inégaux, l'invention parait facilement transposable sur un aéronef bimoteur. Le fonctionnement des moteurs principaux du type bimoteur resterait quasi-inchangé malgré l'adjonction d'un moteur secondaire.

De plus, il est possible de proposer de choisir le moteur secondaire dans une liste de moteurs en fonction du besoin. En effet, la régulation des moteurs principaux étant indépendante de la régulation du moteur secondaire, le choix d'un moteur secondaire donné a peu d'impact sur les moteurs principaux.

Cet aéronef fournit aussi l'opportunité de faire fonctionner le moteur secondaire en fonction de la mission ou de paramètres tels que la vitesse d'avancement de l'aéronef.

Si le moteur secondaire est seulement démarré à basse vitesse d'avancement pour augmenter la sécurité durant cette phase de fonctionnement, l'économie de carburant peut être significative pour des performances en stationnaire et en catégorie A optimisées.

Dans le cas d'un aéronef trimoteur, l'avantage est un dimensionnement optimisé des deux moteurs principaux (pour des conditions de fonctionnement uniquement bimoteur). Les gains en masse, simplicité, coût, consommation carburant, et en émission de gaz peuvent être importants.

De plus, si le moteur secondaire est démarré seulement à basse vitesse d'avancement, la réactivité de l'hélicoptère peut être optimisée en cas de panne d'un des moteurs principaux. L'invention permet en effet d'implémenter un unique régime de secours pouvant être atteint plus rapidement que certains régimes d'urgence de l'état de la technique.

Par ailleurs, dans le cas d'un aéronef trimoteur avec un moteur secondaire ayant une puissance maximale inégale aux moteurs principaux, l'invention permet de fournir à la voilure tournante suffisamment d'énergie en cas de panne d'un moteur principal afin de réaliser des manoeuvres complexes et risquées comme l'atterrissage.

Par conséquent, l'aéronef proposé comporte deux moteurs principaux pilotés selon un objectif variable, et un moteur secondaire piloté selon un objectif constant dans un mode de fonctionnement donné.

Cette architecture novatrice permet de résoudre étonnamment une pluralité de problèmes techniques rencontrés sur certains aéronefs trimoteur.

L'aéronef peut aussi comporter une ou plusieurs des caractéristiques suivantes.

Notamment, une roue libre ou un embrayage est éventuellement interposé entre chaque moteur et la boîte de transmission de puissance.

Le moteur secondaire est ainsi connecté mécaniquement à la boîte de transmission de puissance soit au moyen d'une roue libre permettant de ne pas entraîner le moteur secondaire quand ce moteur secondaire est à l'arrêt (par exemple en cas de panne moteur), soit au moyen d'un embrayage permettant d'activer la liaison mécanique entre le moteur secondaire et la boîte de transmission de puissance dans les configurations requises.

Le moteur secondaire peut alors être relié à la boîte de transmission de puissance par une liaison incluant une roue libre ou en embrayage.

Cette liaison peut être reliée à une liaison mécanique reliant un moteur principal à la boîte de transmission de puissance, ou encore sur une entrée dédiée de la boîte de transmission de puissance

D'ailleurs, si la boîte de transmission comporte plusieurs étages de réduction de vitesse, les moteurs principaux peuvent être connectés à un premier étage de réduction, le moteur secondaire étant connecté à un deuxième étage de réduction.

Chaque moteur serait alors connecté à la boîte de transmission de puissance dans l'étage de réduction convenant à la plage de fonctionnement nominale de son arbre de sortie.

Par ailleurs, selon une variante, on rappelle que chaque moteur principal peut comporter un unique régime de fonctionnement d'urgence.

Le moteur secondaire peut comporter au moins deux régimes de fonctionnement régulés chacun en fonction d'une consigne constante fixe.

Le moteur secondaire est alors régulé par rapport à un l'objectif constant correspondant au régime utilisé.

Par exemple, le moteur secondaire peut fournir une pluralité de puissances objectives afin d'être implémenté sur différents appareils d'une gamme, ou encore pour s'adapter aux différentes missions d'un même appareil. Il ne serait alors plus nécessaire de dimensionner les moteurs pour la mission la plus contraignante, et d'ailleurs souvent la moins fréquement réalisée.

En outre, la consigne constante peut être éventuellement soit une consigne de puissance fixe, soit une consigne de débit carburant fixe. Par exemple, un moteur secondaire thermique peut être régulé selon une consigne de puissance fixe ou une consigne de débit carburant fixe. De même, un moteur secondaire électrique peut être régulé selon une consigne de puissance fixe par exemple.

Selon une variante, le moteur secondaire est alors régulé à une puissance objective constante, dans la limite du domaine de vol de l'hélicoptère, quelle que soit la masse volumique de l'air et quelle que soit la demande de puissance nécessaire générée par le pilote à travers le mouvement des commandes de vol.

Selon une autre variante, le moteur secondaire est alors régulé pour atteindre une position de débit carburant maximal fixe.

La puissance délivrée par le moteur secondaire est alors fonction de paramètres extérieurs à l'aéronef tels que la pression et de la température extérieures.

La position de débit carburant fixe est l'équivalent d'un « gel doseur » dans une position de débit suffisante pour obtenir la puissance nécessaire au point de dimensionnement de l'aéronef.

Cette variante présente l'inconvénient d'induire une puissance variable fournie par le moteur secondaire, la puissance fournie variant en fonction desdits paramètres extérieurs à l'aéronef.

Par contre, la boucle de régulation du moteur secondaire est simple. De plus, cette variante induit une meilleure maitrise de la consommation de carburant.

D'autres variantes sont possibles. Par exemple, le moteur secondaire peut être régulé pour que son arbre de sortie évolue à une vitesse de rotation sensiblement constante.

Selon une variante, l'aéronef comporte un moyen de désactivation du moteur secondaire.

Le moyen de désactivation peut inhiber le moteur secondaire en l'arrêtant, ou encore en le faisant fonctionner selon un régime de ralenti. Le moyen de désactivation peut avoir plusieurs positions relatives à un fonctionnement normal, un fonctionnement au ralenti, à l'arrêt du moteur secondaire, ou encore à un fonctionnement d'urgence par exemple.

Ce moteur secondaire peut alors être activé et désactivé en fonction de la mission (par exemple l'activer seulement si la mission est en vol type recherche), du terrain (par exemple si le terrain n'est pas dégagé), de la vitesse d'avancement de l'hélicoptère (par exemple fonctionnement seulement à basse vitesse), de l'altitude (par exemple fonctionnement seulement en haute altitude), ou de la température extérieure (par exemple fonctionnement seulement à haute température).

Selon un premier mode de réalisation préféré, le moteur secondaire développe une puissance maximale insuffisante pour mettre en survitesse ladite voilure tournante au sol.

Dès lors, le moteur secondaire ne risque pas d'entraîner une survitesse de la voilure tournante au sol.

Ainsi, le moteur secondaire peut être dimensionné pour limiter sa puissance maximale à une puissance inférieure au couple résistant exercé sur l'arbre de sortie du moteur secondaire. On comprend que ce couple résistant résulte de la combinaison du couple résistant de la voilure tournante et du couple résistant de la boîte de transmission de puissance notamment ainsi que de l'effet des forces d'inertie.

Selon un deuxième mode de réalisation, le moteur secondaire développe une puissance maximale suffisante pour mettre en survitesse la voilure tournante.

Dès lors, l'aéronef peut comporter un moyen de détection pour détecter si l'aéronef se trouve au sol, ledit aéronef ayant un moyen d'inhibition inhibant le moteur secondaire au sol.

Ce moyen de détection peut par exemple comprendre un radioaltimètre, ou encore un contacteur agencé sur un train d'atterrissage pour détecter un contact du train d'atterrissage sur le sol.

Ainsi, le moteur secondaire ne fonctionne pas au sol en étant mis à l'arrêt ou au ralenti, pour ne pas mettre la voilure tournante dans un état de survitesse.

Le moteur secondaire peut par contre être activé lorsque l'aéronef est en vol, et ne repose donc plus sur le sol.

Lors de la phase du décollage, le moteur secondaire peut être activé pour entraîner la chaîne mécanique quand l'aéronef se trouve dans l'effet de sol. La procédure de décollage peut alors prévoir un point de vol intermédiaire de vérification.

Si un dysfonctionnement intervient au décollage avant l'activation du moteur secondaire, l'aéronef peut se poser relativement aisément sans aide du moteur secondaire quand l'aéronef est encore dans l'effet de sol. Il en va de même lors de l'atterrissage.

Par ailleurs, l'aéronef peut comporter un système de détection pour détecter si l'aéronef possède une vitesse d'avancement supérieure à une vitesse d'avancement seuil et/ou si la voilure tournante dépasse une vitesse de rotation seuil, ledit aéronef ayant un moyen d'inhibition inhibant le moteur secondaire lorsque l'aéronef possède une vitesse d'avancement supérieure à une vitesse d'avancement seuil et/ou lorsque la voilure tournante dépasse une vitesse de rotation seuil.

Le système de détection peut alors comprendre des moyens usuels de mesure de la vitesse d'avancement de l'aéronef.

De plus, le système de détection peut aussi comprendre des moyens de mesure de la vitesse de rotation de la voilure tournante. A défaut, le système de détection peut évaluer et/ou anticiper la puissance nécessaire pour l'entraînement de la voilure tournante, cette puissance nécessaire devant être inférieure à la puissance objectif fixe fournit par le moteur secondaire pour entraîner la voilure tournante afin que cette voilure tournante ne possède pas une vitesse de rotation excessive.

Ainsi, le moteur secondaire peut fonctionner en vol à basse vitesse et/ou tant que la puissance fournie par ce moteur secondaire est inférieure à la puissance nécessaire pour entraîner la voilure tournante.

Selon une version du premier et du deuxième mode de réalisation, le moyen d'inhibition comporte un moyen de freinage du moteur secondaire.

Si le moteur secondaire possède une puissance maximale constante objective susceptible d'induire une survitesse de la voilure tournante au sol ou en vol, il est possible d'introduire un couple résistant variable. Ce couple résistant variable est activé au sol, mais est éventuellement relâché lorsque le pilote augmente le pas collectif des pales de la voilure tournante. Ce moyen de freinage pourrait comprendre un frein pour freiner une turbine libre du moteur secondaire. Quand l'appareil n'est plus au sol, ce couple résistant variable peut être activé afin d'inhiber le moteur secondaire suivant la logique du système de détection. Ceci permet de détecter si l'aéronef possède une vitesse d'avancement supérieure à une vitesse d'avancement seuil et/ou lorsque la voilure tournante dépasse une vitesse de rotation seuil et/ou lors de l'évaluation de la puissance nécessaire de la voilure tournante devant être inférieure à la puissance objectif fixe fournie par le moteur secondaire.

Selon une version du deuxième mode de réalisation, une roue libre étant interposée entre le moteur secondaire et la boîte de transmission de puissance, le moyen d'inhibition peut comporter un moyen de mise au ralenti ou de mise à l'arrêt dudit moteur secondaire. Par exemple, le moteur secondaire est mis à l'arrêt ou au ralenti lorsque la puissance nécessaire pour entraîner la voilure tournante est inférieure à la puissance disponible fournie par le moteur secondaire.

La roue libre n'empêche pas, selon cette version, l'entraînement de la voilure tournante par le moteur secondaire. Le moteur secondaire est alors arrêté ou mis au ralenti au sol pour éviter une survitesse de la voilure tournante.

Selon une version du premier et deuxième mode de réalisation, un embrayage étant interposé entre le moteur secondaire et ladite boîte de transmission de puissance, ledit moyen d'inhibition comporte un moyen de débrayage dudit embrayage.

L'embrayage est alors débrayé au sol.

Outre un aéronef, l'invention vise aussi un procédé d'entraînement en rotation d'une boîte de transmission de puissance mettant en rotation une voilure tournante d'un aéronef, ledit aéronef comportant un premier moteur principal et un deuxième moteur principal mettant en mouvement ladite boîte de transmission de puissance, ledit aéronef étant pourvu d'un système principal de régulation régulant le premier moteur principal et le deuxième moteur principal selon une consigne variable.

L'aéronef étant tel que décrit précédemment, on agence un moteur secondaire destiné à mettre en mouvement ladite boîte de transmission de puissance, et on régule le moteur secondaire selon une consigne constante avec un système secondaire de régulation qui est indépendant dudit système principal de régulation.

Ce procédé peut de plus comporter une ou plusieurs des caractéristiques qui suivent.

Par exemple, on peut réguler le moteur secondaire afin que la réactivité de ce moteur secondaire soit inférieure à la réactivité des moteurs principaux, et donc que le temps de réaction de ce moteur secondaire soit supérieur au temps de réaction des moteurs principaux.

En outre, on peut réguler le moteur secondaire en fonction d'une consigne constante pouvant être soit une consigne de puissance fixe soit une consigne de débit de carburant fixe.

Selon un premier mode de réalisation, le moteur secondaire développant une puissance maximale insuffisante pour mettre en survitesse ladite voilure tournante au sol :
- au démarrage de l'aéronef, on peut faire fonctionner le moteur secondaire et les moteurs principaux au sol pour entraîner la voilure tournante,
- suivant le système de détection, lorsque l'aéronef évolue en vol à une vitesse d'avancement supérieure à une vitesse d'avancement seuil ou lorsque la voilure tournante dépasse une vitesse de rotation seuil, ou lorsque la puissance nécessaire pour l'entraînement de la voilure tournante est inférieure à la puissance fournie par le moteur secondaire, on inhibe le moteur secondaire.

Selon un deuxième mode de réalisation, le moteur secondaire développant une puissance maximale suffisante pour mettre en survitesse ladite voilure tournante :
- au sol, on fait fonctionner les moteurs principaux pour entraîner la voilure tournante et on inhibe le moteur secondaire,
- en vol, lorsque l'aéronef évolue à une vitesse d'avancement inférieure à une vitesse seuil et lorsque la vitesse de rotation de la voilure tournante est inférieure à une vitesse de rotation seuil, ou lorsque la puissance nécessaire pour l'entraînement de la voilure tournante est supérieure à la puissance fournie par le moteur secondaire, suivant le système de détection, on n'inhibe plus le moteur secondaire.

L'invention et ses avantages apparaîtront avec plus de détails dans le cadre de la description qui suit avec des exemples de réalisation donnés à titre illustratif en référence aux figures annexées qui représentent :
- les figures 1 et 2, des variantes d'un aéronef selon l'invention,
- les figures 3 et 4, des schémas relatifs à des variantes de régulation du moteur secondaire,
- la figure 5, un schéma explicitant le fonctionnement d'un premier mode de réalisation de l'invention, et
- la figure 6, un schéma explicitant le fonctionnement d'un deuxième mode de réalisation de l'invention.

Les éléments présents dans plusieurs figures distinctes sont affectés d'une seule et même référence.

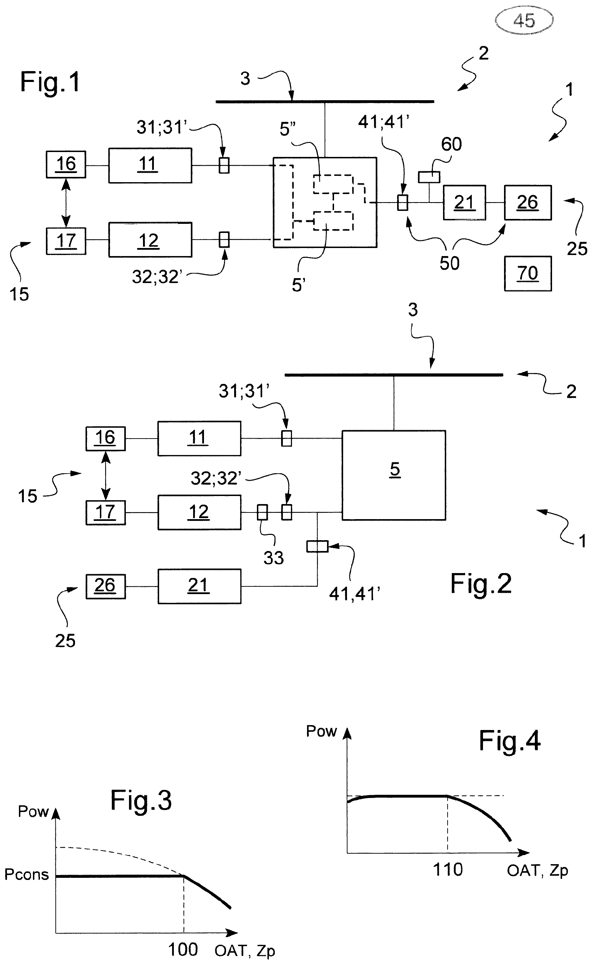

La figure 1 présente un aéronef 1 muni d'une voilure tournante 2 et d'au moins une boîte de transmission de puissance 5 entraînant en rotation cette voilure tournante 2.

La voilure tournante peut comprendre au moins un rotor 3 de sustentation voire de propulsion.

Cette voilure tournante peut toutefois comprendre une pluralité de rotors. Eventuellement, la boîte de transmission de puissance 5 peut entraîner un rotor au travers d'une boîte complémentaire de transmission de puissance par exemple.

Par ailleurs, l'aéronef 1 est pourvu d'une trois moteurs destinés à mettre en mouvement la boîte de transmission de puissance 5.

Ainsi, l'aéronef comprend un premier moteur principal 11 et un deuxième moteur principal 12, éventuellement identiques. Ces moteurs principaux 11, 12 peuvent être des moteurs thermiques, tels que des turbomoteurs à turbine libre. Chaque moteur principal est alors pourvu d'un arbre de sortie relié à la boîte de transmission de puissance 5.

Chaque moteur principal 11, 12 peut fonctionner selon au moins un régime d'utilisation normal, et au moins un régime d'utilisation d'urgence.

Eventuellement, chaque moteur principal peut être certifié pour fonctionner selon un régime de décollage parfois connu sous l'acronyme PMD, selon un régime de vol continu parfois connu sous l'acronyme PMC, et selon un régime transitoire parfois connu sous l'acronyme PMT. De plus, chaque moteur principal peut être certifié pour fonctionner selon un régime d'urgence en continu parfois connu sous l'acronyme OEI, selon un premier régime de super urgence parfois connu sous l'acronyme OEI 2', et selon un deuxième régime de super urgence parfois connu sous l'acronyme OEI 30".

Un unique régime d'urgence peut être suffisant selon l'invention.

Un système de désolidarisation peut être interposé entre l'arbre de sortie de chaque moteur principal et la boîte de transmission. Un tel système peut inclure au moins une roue libre 31, 32, et/ ou au moins un embrayage 31', 32', voire un système de réduction à une ou plusieurs vitesses de rotation de type boîte de vitesses.

L'aéronef comporte de plus un système principal de régulation 15 pour réguler les moteurs principaux selon une consigne variable. Par exemple, le système principal de régulation met en oeuvre une consigne de vitesse de rotation NTL d'une turbine libre des moteurs principaux. Cette consigne varie pour le régime d'utilisation courant d'un moteur en fonction de la puissance à fournir et des consignes extérieures à l'aéronef par exemple voire des conditions d'utilisation de l'autre moteur.

Ce système principal de régulation 15 peut comprendre une première unité de contrôle principale 16 régulant le premier moteur principal 11, et une deuxième unité de contrôle principale 17 régulant le deuxième moteur principal 12. La première unité de contrôle principale 16 communique éventuellement avec la deuxième unité de contrôle principale 17.

Par ailleurs, l'aéronef comporte de plus un moteur secondaire 21 destiné à mettre en mouvement la boîte de transmission de puissance 5. Ce moteur secondaire peut être un moteur thermique ou électrique, identique ou éventuellement différent des moteurs principaux. Le moteur secondaire 21 peut notamment présenter une réactivité inférieure à la réactivité des moteurs principaux 11, 12, et donc un temps de réaction en accélération ou en décélération supérieur aux temps de réaction des moteurs principaux 11, 12.

Le moteur secondaire peut être dimensionné pour fournir une puissance inférieure à la puissance pouvant être développée par un moteur principal.

En référence à la variante de la figure 1, le moteur secondaire peut être relié à la boîte de transmission de puissance 5.

La boîte de transmission de puissance 5 comporte usuellement plusieurs étages de réduction 5', 5" de vitesse de rotation. Si les moteurs principaux et secondaire ont des caractéristiques différentes, les moteurs principaux 11, 12 peuvent être connectés à un premier étage de réduction 5' qui est adapté à leurs caractéristiques, le moteur secondaire 21 étant connecté à un deuxième étage de réduction 5" qui est adapté à ses propres caractéristiques.

En référence à la variante de la figure 2, le moteur secondaire 21 peut être agencé en parallèle d'un moteur principal.

Si les moteurs principaux et secondaire ont des caractéristiques différentes, un réducteur de vitesse de rotation 33 peut être disposé à la sortie du moteur principal coopérant avec le moteur secondaire.

Indépendamment de la variante, le moteur secondaire fonctionne préférentiellement selon un unique régime. Cependant, ce moteur secondaire 21 peut être associé à une pluralité de régimes, pour par exemple être adapté à différents types de missions ou d'aéronefs.

Dès lors, l'aéronef 1 possède un système secondaire de régulation 25 qui régule le moteur secondaire 21. Pour un régime d'utilisation courant du moteur secondaire, le système secondaire de régulation 25 contrôle le moteur secondaire pour le faire tendre vers une consigne constante, contrairement à la régulation appliquée aux moteurs principaux.

Cette consigne ne varie pas durant tout le temps d'utilisation du régime courant. On comprend que l'on entend par « régulation selon une consigne constante », l'application d'une consigne fixe pour le régime d'utilisation courant.

Par exemple, le moteur secondaire peut être dimensionné pour être régulé en puissance, et fonctionner selon un premier et un deuxième régimes associés respectivement à une puissance de 200 Kilowatts et de 400 kilowatts.

Lors de l'application du premier régime, la régulation tend à maintenir la puissance développée par le moteur secondaire à une consigne constante fixe de 200 kilowatts. Si un pilote change le régime à appliquer au moteur secondaire pour appliquer le deuxième régime, la régulation tend à maintenir la puissance développée par le moteur secondaire à une consigne constante fixe de 400 kilowatts. Il n'en demeure pas moins que la régulation applique tout le temps une consigne constant et donc fixe.

Le système secondaire de régulation 25 est alors de fait indépendant du système principal de régulation 15.

Le système secondaire de régulation 25 présenté comporte une unité de contrôle secondaire 26 pour contrôler le moteur secondaire 21, l'unité de contrôle secondaire 26 étant dépourvue de lien avec les unités de contrôles principales 16, 17.

Les figures 3 et 4 montrent des diagrammes présentant des conditions extérieures OAT et/ou l'altitude de l'aéronef en abscisse, et la puissance développée par le moteur secondaire en ordonnée.

En référence à la figure 3, la consigne peut donc être une consigne de puissance. On comprend néanmoins qu'à partir d'un seuil 100, le moteur secondaire ne sera plus en mesure de fournir la puissance de consigne PCONS compte tenu des conditions extérieures OAT et/ou de l'altitude de l'aéronef.

En référence à la figure 4, la consigne peut être une consigne de débit carburant fixe déterminée pour fournir une puissance prédéfinie au point de dimensionnement 110 de l'aéronef. La puissance fournie par le moteur secondaire varie alors en fonction des conditions extérieures OAT et/ou de l'altitude de l'aéronef.

Par ailleurs et en référence à la figure 1, un système de déconnexion est installé ente le moteur secondaire 21 et la boîte de transmission de puissance 5. Un tel système peut inclure au moins une roue libre 41, et/ ou au moins un embrayage 41', voire un système de réduction à une ou plusieurs vitesses de rotation de type boîte de vitesses.

En outre, l'aéronef peut comporter un moyen de désactivation 50 du moteur secondaire 21. Un tel moyen de désactivation 50 peut inclure un système de déconnexion ou encore l'unité de contrôle secondaire.

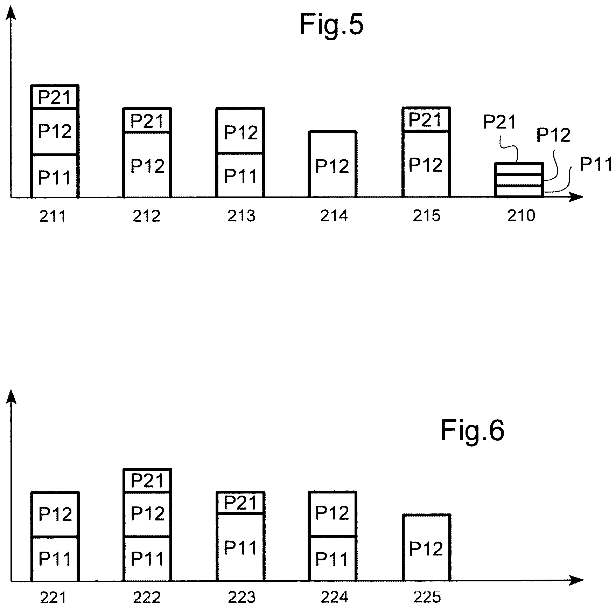

Les figures 5 et 6 présentent des schémas pour expliciter le fonctionnement de l'aéronef selon un premier et un deuxième modes de réalisation. Chacune de ces figures 5 et 6 schématise la puissance développée par les moteurs en ordonnée, selon diverses situations de vol. Les puissances développées par le premier moteur principal ainsi que le deuxième moteur principal et le moteur secondaire sont respectivement référencées P11, P12, P21 sur les figures 5 et 6.

Indépendamment de la réalisation, on comprend que le procédé appliqué suggère d'agencer un moteur secondaire 21 destiné à mettre en mouvement la boîte de transmission de puissance 5, et de réguler ce moteur secondaire 21 selon une consigne constante avec un système secondaire de régulation 25 qui est indépendant du système principal de régulation 15.

Eventuellement, on règle le moteur secondaire 21 afin que la réactivité du moteur secondaire 21 soit inférieure à la réactivité des moteurs principaux 11, 12, et donc que le temps de réaction du moteur secondaire 21 soit supérieur au temps de réaction des moteurs principaux 11, 12.

De plus, on peut réguler le moteur secondaire 21 en fonction par exemple soit d'une consigne de puissance fixe soit d'une consigne de débit de carburant fixe.

Selon le premier mode de réalisation, on dimensionne le moteur secondaire 21 pour développer une puissance maximale faible. Cette puissance maximale est dite faible dans la mesure où cette puissance maximale est insuffisante pour mettre en survitesse la voilure tournante 2 lorsque les moteurs principaux sont à l'arrêt voire au ralenti.

Dès lors, le moteur secondaire peut être démarré au sol sans risquer d'entraîner la survitesse de la voilure tournante.

Durant une première situation 210, on fait fonctionner le moteur secondaire 21 et les moteurs principaux 11, 12 au sol pour entraîner la voilure tournante 2. Les moteurs principaux étant régulés selon une consigne variable, le système principal de régulation permet de garantir que les moteurs principaux et secondaire ne vont pas engendrer une survitesse de la voilure tournante.

Eventuellement, les moteurs principaux développent une puissance nulle au sol.

Eventuellement, le moteur secondaire dispose d'un mode de régulation spécifique d'une turbine libre au sol dédié à la génération électrique en mode débrayé, pour entraîner les générateurs électriques mécaniquement connectés à la turbine libre.

Eventuellement, le moteur secondaire dispose d'un mode de régulation spécifique du générateur de gaz au sol dédié à la génération électrique en mode débrayé, pour entraîner les générateurs électriques mécaniquement connectés au générateur de gaz.

Par ailleurs, lorsque l'aéronef 1 évolue en vol à une vitesse d'avancement supérieure à une vitesse d'avancement seuil ou lorsque la voilure tournante dépasse une vitesse de rotation seuil, on inhibe le moteur secondaire 21.

A l'inverse, lorsque l'aéronef 1 évolue en vol à une vitesse d'avancement inférieure à une vitesse seuil et/ou lorsque la vitesse de rotation de la voilure tournante est inférieure à une vitesse de rotation seuil, on n'inhibe pas le moteur secondaire 21.

Ainsi, durant une phase 211 de décollage ou de vol stationnaire, le moteur secondaire 21 est en fonctionnement.

Toutefois, si la vitesse de rotation de la voilure tournante dépasse la vitesse de rotation seuil, on inhibe le moteur secondaire. Le système secondaire de régulation met alors le moteur secondaire au ralenti ou à l'arrêt.

La vitesse de rotation seuil peut être inférieure à la vitesse correspondant à une survitesse de la voilure tournante, mais toutefois supérieure à la vitesse nominale de rotation de la voilure tournante.

En cas de panne d'un moteur principal représentée par la configuration 212, l'autre moteur principal peut alors être régulé pour fournir une puissance d'urgence, le moteur secondaire restant actif dans l'entraînement de la voilure tournante.

Par contre, durant un vol d'avancement usuel représenté par la configuration 213, le moteur secondaire est inhibé.

En cas de panne d'un moteur principal représentée par la configuration 214, l'autre moteur principal peut alors être régulé pour fournir une puissance d'urgence conformément à la configuration 214. Si nécessaire et en complément, il est aussi possible d'assister le moteur principal restant en fonctionnement avec le moteur secondaire 21 selon la configuration 215.

Avec un moteur secondaire développant une puissance modérée comparée aux moteurs principaux, on constate qu'il est possible de développer dans la configuration de panne 215 une puissance totale qui est égale à la puissance totale atteinte en l'absence de panne telle que représentée dans la configuration 213.

Selon un deuxième mode réalisation, on dimensionne le moteur secondaire 21 pour développer une puissance maximale élevée. Cette puissance maximale est dite élevée dans la mesure où cette puissance maximale est suffisante pour mettre en survitesse la voilure tournante 2 lorsque les moteurs principaux sont à l'arrêt voire au ralenti.

Dès lors, on fait fonctionner au sol les moteurs principaux pour entraîner la voilure tournante et on inhibe le moteur secondaire tant que l'aéronef évolue à une altitude inférieure à une altitude seuil ou lorsque la voilure tournante dépasse une vitesse de rotation seuil.

Lorsque l'aéronef évolue à une vitesse d'avancement inférieure à une vitesse seuil et à une altitude supérieure à une altitude seuil, on n'inhibe plus le moteur secondaire.

En référence à la figure 1, l'aéronef 1 est muni d'un moyen de détection 70 pour détecter si l'aéronef repose sur le sol. Ce moyen de détection 70 comprend par exemple un radioaltimètre ou un capteur agencé sur un train d'atterrissage.

Eventuellement, l'aéronef 1 est muni d'un système de détection pour détecter si l'aéronef possède une vitesse d'avancement supérieure à une vitesse d'avancement seuil et/ou si la voilure tournante dépasse une vitesse de rotation seuil. Le système de détection est par exemple muni de moyens usuels de mesure de la vitesse d'avancement de l'aéronef, de moyens de mesure de la vitesse de rotation de la voilure tournante, et/ou de moyens de détermination de la puissance fournie par le moteur secondaire et/ou de moyens de détermination de la puissance nécessaire pour entraîner la voilure tournante.

De plus, l'aéronef possède un moyen d'inhibition inhibant le moteur secondaire quand au moins une des trois conditions suivante est remplie :
- l'aéronef repose sur le sol,
- l'aéronef possède une vitesse d'avancement supérieure à une vitesse d'avancement seuil,
- la vitesse de rotation de la voilure tournante dépasse une vitesse de rotation seuil ou la puissance nécessaire pour l'entraînement de la voilure tournante est inférieure a la puissance disponible fournie par le moteur secondaire.

Selon la version, le moyen d'inhibition peut comporter un moyen de freinage 60 du moteur secondaire.

De manière alternative, une roue libre 41 étant interposée entre le moteur secondaire 21 et la boîte de transmission de puissance 5, le moyen d'inhibition comporte un moyen de mise au ralenti ou de mise à l'arrêt du moteur secondaire pour éviter une survitesse.

Par contre, si un embrayage 41' est interposé entre le moteur secondaire 21 et la boîte de transmission de puissance 5, le moyen d'inhibition comporte un moyen de débrayage de l'embrayage. Le moteur secondaire peut alors disposer d'un mode de régulation spécifique en mode débrayé.

Le contrôle de l'inhibition du moteur secondaire peut être automatique via le système secondaire de régulation par exemple, et/ou manuel.

Selon la figure 6 et la configuration 221, au sol le moteur secondaire est inhibé.

En présence d'une roue libre, le moteur secondaire est mis au ralenti ou à l'arrêt.

En présence d'un embrayage, le moteur secondaire peut être au ralenti, à l'arrêt ou en mode de régulation spécifique pour la génération électrique.

Le décollage s'effectue en sollicitant uniquement les moteurs principaux pour entraîner la voilure tournante jusqu'à une hauteur telle que l'appareil reste dans la zone d'effet de sol. Si un moteur tombe en panne, l'aéronef est suffisamment près du sol pour se poser.

Lorsque l'aéronef décolle, on sollicite le moteur secondaire.

En vol, le moteur secondaire peut alors être utilisé lorsque l'aéronef évolue à une vitesse d'avancement inférieure à une vitesse seuil selon la configuration 222, et lorsque la puissance fournie par le moteur secondaire est inférieure à la puissance requise par la voilure tournante.

Le moteur secondaire est alors dans une position de vol, et un éventuel embrayage est embrayé le cas échéant.

Eventuellement, une vérification de bon fonctionnement des moteurs principaux et secondaire est effectuée dans l'effet de sol par le pilote ou par le système avionique de l'aéronef.

En cas de panne d'un moteur principal représentée par la configuration 223, l'autre moteur principal peut alors être régulé pour fournir une puissance d'urgence, le moteur secondaire restant actif dans l'entraînement de la voilure tournante.

Par contre, durant un vol d'avancement usuel représenté par la configuration 224, le moteur secondaire est inhibé. L'aéronef évolue alors à une vitesse d'avancement supérieure à la vitesse seuil.

En cas de panne d'un moteur principal représentée par la configuration 225, l'autre moteur principal peut alors être régulé pour fournir une puissance d'urgence. Si nécessaire et en complément, il est aussi possible d'assister le moteur principal restant en fonctionnement avec le moteur secondaire 21.

Lors de l'atterrissage, les trois moteurs fournissent la puissance requise. La vitesse d'avancement de l'aéronef est en effet inférieure à la vitesse d'avancement seuil.

Quand l'altitude de l'aéronef atteint le sol, le moteur secondaire est inhibé en étant soit arrêté soit mis au ralenti. En fonction de la variante, on considère que le sol est atteint lorsque l'aéronef entre en contact avec le sol ou lorsque l'aéronef passe en dessous d'une altitude radio-altimétrique seuil.

Dans cette dernière configuration, l'atterrissage jusqu'au touché au sol se fait alors avec les deux moteurs principaux 11, 12.

Au toucher au sol, à plein petit pas des pales de la voilure tournante, une vérification de l'état du moteur secondaire est réalisée par le pilote ou par l'avionique de l'aéronef pour vérifier son fonctionnement au ralenti ou son arrêt.

Au sol et selon la version munie d'un embrayage, le moteur secondaire pourrait être inhibé en état de vol (en étant régulé selon une consigne fixe) mais débrayé ou suivant sa régulation spécifique pour la génération électrique.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, le moteur secondaire peut être démarré voire utilisé en permanence au cours d'un vol, ou utilisé par intermittence selon des procédures alternatives.

## Revendications

1. Aéronef (1) muni d'une voilure tournante (2) et d'au moins une boîte de transmission de puissance (5) pour l'entraînement en rotation de ladite voiture tournante (2), ledit aéronef (1) comportant un premier moteur principal (11) et un deuxième moteur principal (12) aptes à mettre en mouvement ladite boîte de transmission de puissance (5), ledit aéronef (1) étant pourvu d'un système principal de régulation (15) apte à réguler le premier moteur principal (11) et le deuxième moteur principal (12) selon une consigne variable pour un régime d'utilisation courant du premier moteur principal (11) et du deuxième moteur principal (12), ledit aéronef (1) étant muni d'un moteur secondaire (21) apte à mettre en mouvement ladite boîte de transmission de puissance (5), ledit aéronef (1) ayant un système secondaire de régulation (25)
**caractérisé en ce que** ledit système secondaire de régulation (25) est apte à réguler le moteur secondaire (21) selon une consigne constante pour un régime d'utilisation courant du moteur secondaire (21), le système secondaire de régulation (25) étant indépendant dudit système principal de régulation (15).

2. Aéronef selon la revendication 1,
**caractérisé en ce que** ledit système principal de régulation (15) comporte une première unité de contrôle principale (16) pour contrôler le premier moteur principal (11) et une deuxième unité de contrôle principale (17) pour contrôler le deuxième moteur principal (12), la première unité de contrôle principale (16) communiquant avec la deuxième unité de contrôle principale (17), ledit système secondaire de régulation (25) comportant une unité de contrôle secondaire (26) pour contrôler le moteur secondaire (21), ladite unité de contrôle secondaire (26) étant dépourvue de lien avec les unités de contrôles principales (16, 17).

3. Aéronef selon l'une quelconque des revendications 1 à 2,
**caractérisé en ce qu'**une roue libre (31, 32, 41) ou un embrayage (31', 32', 41') est interposé entre chaque moteur (11, 12, 21) et ladite boîte de transmission de puissance (5).

4. Aéronef selon l'une quelconque des revendications 1 à 3,
**caractérisé en ce que** ledit moteur secondaire (21) présente une réactivité inférieure à une réactivité des moteurs principaux (11, 12).

5. Aéronef selon l'une quelconque des revendications 1 à 4,
**caractérisé en ce que** lesdits moteurs principaux (11, 12) sont identiques, le moteur secondaire (21) étant différent desdits moteurs principaux (11, 12).

6. Aéronef selon la revendication 5,
**caractérisé en ce que** ladite boîte de transmission de puissance (5) comportant plusieurs étages de réduction (5', 5"), lesdites moteurs principaux (11, 12) sont connectés à un premier étage de réduction (5') d'une vitesse de rotation, ledit moteur secondaire (21) étant connecté à un deuxième étage de réduction (5") d'une vitesse de rotation.

7. Aéronef selon l'une quelconque des revendications 1 à 6,
**caractérisé en ce que** chaque moteur principal (11, 12) comporte un unique régime de fonctionnement d'urgence.

8. Aéronef selon l'une quelconque des revendications 1 à 7,
**caractérisé en ce que** ledit moteur secondaire (21) comporte au moins deux régimes de fonctionnement régulés chacun en fonction d'une consigne constante.

9. Aéronef selon l'une quelconque des revendications 1 à 8,
**caractérisé en ce que**, ladite consigne constante est soit une consigne de puissance fixe, soit une consigne de débit carburant fixe lorsque ledit moteur secondaire étant un moteur thermique.

10. Aéronef selon l'une quelconque des revendications 1 à 9,
**caractérisé en ce que** ledit aéronef comporte un moyen de désactivation (50) pour désactiver ledit moteur secondaire (21).

11. Aéronef selon l'une quelconque des revendications 1 à 10,
**caractérisé en ce que** ledit moteur secondaire (21) développe une puissance maximale insuffisante pour mettre en survitesse ladite voiture tournante (2) au sol.

12. Aéronef selon l'une quelconque des revendications 1 à 11,
**caractérisé en ce que**, ledit moteur secondaire (21) développant une puissance maximale suffisante pour mettre en survitesse ladite voiture tournante (2), ledit aéronef (1) comporte un moyen de détection (70) pour détecter si l'aéronef se trouve au sol, ledit aéronef ayant un moyen d'inhibition inhibant ledit moteur secondaire au sol.

13. Aéronef selon l'une quelconque des revendications 1 à 12,
**caractérisé en ce que** l'aéronef peut comporter un système de détection pour détecter si l'aéronef possède une vitesse d'avancement supérieure à une vitesse d'avancement seuil et/ou si la voilure tournante dépasse une vitesse de rotation seuil, ledit aéronef ayant un moyen d'inhibition inhibant le moteur secondaire lorsque l'aéronef possède une vitesse d'avancement supérieure à une vitesse d'avancement seuil et/ou lorsque la voilure tournante dépasse une vitesse de rotation seuil et/ou lorsque la puissance nécessaire pour l'entraînement de la voilure tournante est inférieure à la puissance disponible fournie par le moteur secondaire

14. Aéronef selon la revendication 12 ou la revendication 13,
**caractérisé en ce que** ledit moyen d'inhibition comporte un moyen de freinage (60) dudit moteur secondaire.

15. Aéronef selon la revendication 12 ou la revendication 13,
**caractérisé en ce que**, une roue libre (41) étant interposée entre ledit moteur secondaire (21) et ladite boîte de transmission de puissance (5), ledit moyen d'inhibition comporte un moyen de mise au ralenti ou de mise à l'arrêt dudit moteur secondaire.

16. Aéronef selon la revendication 12 ou la revendication 13,
**caractérisé en ce que**, un embrayage (41') étant interposé entre ledit moteur secondaire (21) et ladite boîte de transmission de puissance (5), ledit moyen d'inhibition comporte un moyen de débrayage dudit embrayage.

17. Procédé d'entraînement en rotation d'une boîte de transmission de puissance (5) mettant en rotation une voilure tournante (2) d'aéronef (1), ledit aéronef (1) comportant un premier moteur principal (11) et un deuxième moteur principal (12) mettant en mouvement ladite boîte de transmission de puissance (5), ledit aéronef (1) étant pourvu d'un système principal de régulation (15) régulant le premier moteur principal (11) et le deuxième moteur principal (12) selon une consigne variable pour un régime d'utilisation courant du premier moteur principal (11) et du deuxième moteur principal (12),
le procédé ayant les étapes suivantes:
on agence un moteur secondaire (21) destiné à mettre en mouvement ladite boîte de transmission de puissance (5), **caractérisé par** l'étape suivante:
on régule le moteur secondaire (21) selon une consigne constante pour un régime d'utilisation courant du moteur secondaire (21)
avec un système secondaire de régulation (25) qui est indépendant dudit système principal de régulation (15).

18. Procédé selon la revendication 17,
**caractérisé en ce qu'**on régule le moteur secondaire (21) afin qu'une réactivité du moteur secondaire (21) soit inférieure à une réactivité des moteurs principaux.

19. Procédé selon la revendication 17,
**caractérisé en ce qu'**on régule le moteur secondaire (21) en fonction soit d'une consigne de puissance fixe, soit d'une consigne de débit de carburant fixe lorsque ledit moteur secondaire étant un moteur thermique.

20. Procédé selon la revendication 17,
**caractérisé en ce que** ledit moteur secondaire (21) développant une puissance maximale insuffisante pour mettre en survitesse ladite voilure tournante (2) au sol :
- au démarrage de l'aéronef (1), on fait fonctionner le moteur secondaire (21) et les moteurs principaux (11, 12) au sol pour entraîner la voilure tournante (2),
- lorsque l'aéronef (1) évolue en vol à une vitesse d'avancement supérieure à une vitesse d'avancement seuil ou lorsque la voilure tournante dépasse une vitesse de rotation seuil et/ou lorsque la puissance nécessaire pour l'entraînement de la voilure tournante est inférieure à la puissance disponible fournie par le moteur secondaire, on inhibe le moteur secondaire (21).

21. Procédé selon la revendication 17,
**caractérisé en ce que**, ledit moteur secondaire (21) développant une puissance maximale suffisante pour mettre en survitesse ladite voilure tournante (2) :
- au sol, on fait fonctionner les moteurs principaux entraîner la voilure tournante et on inhibe le moteur secondaire,
- en vol, lorsque l'aéronef évolue à une vitesse d'avancement inférieure à une vitesse seuil et lorsque la vitesse de rotation de la voilure tournante est inférieure à une vitesse de rotation seuil et/ou lorsque la puissance nécessaire pour l'entraînement de la voilure tournante est supérieure a la puissance disponible fournit par le moteur secondaire, on n'inhibe plus le moteur secondaire.

## Patentansprüche

1. Luftfahrzeug (1) mit Drehflügeln (2) und mindestens einem Leistungsgetriebe (5) zum Drehantrieb der Drehflügel (2), wobei das Luftfahrzeug (1) ein erstes Haupttriebwerk (11) und ein zweites Haupttriebwerk (12) aufweist, die das Hauptleistungsgetriebe (5) in Bewegung setzen können, wobei das Luftfahrzeug (1) mit einem Hauptregelsystem (15) versehen ist, das das erste Haupttriebwerk (11) und das zweite Haupttriebwerk (12) gemäß einer variablen Zielgröße für eine aktuelle Betriebsart des ersten Haupttriebwerks (11) und des zweiten Haupttriebwerks (12) regeln kann, wobei das Luftfahrzeug (1) mit einem Hilfstriebwerk (21) versehen ist, das das Leistungsgetriebe (5) in Bewegung versetzen kann, wobei das Luftfahrzeug (1) ein Hilfsregelsystem (25) aufweist,
**dadurch gekennzeichnet, dass** das Hilfsregelsystem (25) das Hilfstriebwerk (21) gemäß einer konstanten Zielgröße für eine aktuelle Betriebsart des Hilfstriebwerks (21) regeln kann, wobei das Hilfsregelsystem (25) unabhängig von dem Hauptregelsystem (15) ist.

2. Luftfahrzeug nach Anspruch 1,
**dadurch gekennzeichnet, dass** das Hauptregelsystem (15) eine erste Hauptsteuereinheit (16) aufweist zum Steuern des ersten Haupttriebwerks (11) und eine zweite Hauptsteuereinheit (17) zum Steuern des zweiten Haupttriebwerks (12), wobei die erste Hauptsteuereinheit (16) mit der zweiten Hauptsteuereinheit (17) kommuniziert, wobei das Hilfsregelsystem (25) eine Hilfssteuereinheit (26) aufweist zum Steuern des Hilfstriebwerks (21), wobei die Hilfssteuereinheit (26) keine Verbindung mit den Hauptsteuereinheiten (16, 17) hat.

3. Luftfahrzeug nach einem der Ansprüche 1 bis 2,
**dadurch gekennzeichnet, dass** ein Freilauf (31, 32, 41) oder eine Kupplung (31', 32', 41') zwischen jedem Triebwerk (11, 12, 21) und dem Leistungsgetriebe (5) angeordnet ist.

4. Luftfahrzeug nach einem der Ansprüche 1 bis 3,
**dadurch gekennzeichnet, dass** das Hilfstriebwerk (21) eine Reaktionsfähigkeit aufweist, die kleiner ist als die Reaktionsfähigkeit der Haupttriebwerke (11, 12).

5. Luftfahrzeug nach einem der Ansprüche 1 bis 4,
**dadurch gekennzeichnet, dass** die Haupttriebwerke (11, 12) identisch sind, wobei das Hilfstriebwerk (21) von den Haupttriebwerken (11, 12) verschieden ist.

6. Luftfahrzeug nach Anspruch 5,
**dadurch gekennzeichnet, dass** das Leistungsgetriebe (5) mehrere Untersetzungsstufen (5', 5") aufweist, wobei die Haupttriebwerke (11, 12) an eine erste Drehgeschwindigkeitsreduktionsstufe (5') angeschlossen sind, wobei das Hilfstriebwerk (21) an eine zweite Drehgeschwindigkeitsreduktionstufe (5") angeschlossen ist.

7. Luftfahrzeug nach einem der Ansprüche 1 bis 6,
**dadurch gekennzeichnet, dass** jedes Haupttriebwerk (11, 12) eine einzige Notbetriebsart aufweist.

8. Luftfahrzeug nach einem der Ansprüche 1 bis 7,
**dadurch gekennzeichnet, dass** das Hilfstriebwerk (21) mindestens zwei Betriebsarten aufweist, die jeweils in Abhängigkeit von einer konstanten Zielgröße geregelt werden.

9. Luftfahrzeug nach einem der Ansprüche 1 bis 8,
**dadurch gekennzeichnet, dass** die konstante Zielgröße entweder eine feste Leistungszielgröße oder eine feste Kraftstoffdurchsatzgröße ist, wenn das Hilfstriebwerk ein Verbrennungsmotor ist.

10. Luftfahrzeug nach einem der Ansprüche 1 bis 9,
**dadurch gekennzeichnet, dass** das Luftfahrzeug ein Abschaltmittel (50) aufweist zum Abschalten des Hilfstriebwerks (21).

11. Luftfahrzeug nach einem der Ansprüche 1 bis 10,
**dadurch gekennzeichnet, dass** das Hilfstriebwerk (21) eine maximale Leistung entwickelt, die nicht ausreicht, um die Drehflügel (2) am Boden auf eine Überdrehzahl zu bringen.

12. Luftfahrzeug nach einem der Ansprüche 1 bis 11,
**dadurch gekennzeichnet, dass** das Hilfstriebwerk (21) eine maximale Leistung entwickelt, die ausreicht, um die Drehflügel (2) auf eine Überdrehzahl zu bringen, wobei das Luftfahrzeug (1) ein Erfassungsmittel (70) aufweist zum Erfassen, ob das Luftfahrzeug sich am Boden befindet, wobei das Luftfahrzeug ein Blockiermittel aufweist zum Blockieren des Hilfstriebwerks am Boden.

13. Luftfahrzeug nach einem der Ansprüche 1 bis 12,
**dadurch gekennzeichnet, dass** das Luftfahrzeug ein Erfassungssystem aufweisen kann zum Erfassen, ob das Luftfahrzeug eine Fluggeschwindigkeit aufweist, die größer als ein Fluggeschwindigkeitsschwellenwert ist, und/oder ob die Drehflügel einen Rotationsgeschwindigkeitsschwellenwert überschreiten, wobei das Luftfahrzeug ein Blockiermittel aufweist, das das Hilfstriebwerk blockiert, wenn das Luftfahrzeug eine Fluggeschwindigkeit aufweist, die größer als ein Fluggeschwindigkeitsschwellenwert ist, und/oder wenn die Drehflügel einen Rotationsgeschwindigkeitsschwellenwert überschreiten, und/oder wenn die Leistung, die für den Antrieb der Drehflügel erforderlich ist, kleiner ist als die verfügbare Leistung, die von dem Hilfstriebwerk geliefert wird.

14. Luftfahrzeug nach Anspruch 12 oder Anspruch 13,
**dadurch gekennzeichnet, dass** das Blockiermittel ein Bremsmittel (60) des Hilfstriebwerks aufweist.

15. Luftfahrzeug nach Anspruch 12 oder Anspruch 13,
**dadurch gekennzeichnet, dass** ein Freilauf (41) zwischen dem Hilfstriebwerk (21) und dem Leistungsgetriebe (5) angeordnet ist, wobei das Blockiermittel ein Mittel zum Verlangsamen oder zum Stoppen des Hilfstriebwerks aufweist.

16. Luftfahrzeug nach Anspruch 12 oder Anspruch 13,
**dadurch gekennzeichnet, dass** eine Kupplung (41') zwischen dem Hilfstriebwerk (21) und dem Leistungsgetriebe (5) angeordnet ist, wobei das Blockiermittel ein Mittel zum Auskuppeln der Kupplung aufweist.

17. Verfahren für den Drehantrieb eines Leistungsgetriebes (5), welches Drehflügel (2) eines Luftfahrzeugs (1) dreht, wobei das Luftfahrzeug (1) ein erstes Haupttriebwerk (11) und ein zweites Haupttriebwerk (12) aufweist, die das Leistungsgetriebe (5) drehen, wobei das Luftfahrzeug (1) mit einem Hauptregelsystem (15) versehen ist, welches das erste Haupttriebwerk (11) und das zweite Haupttriebwerk (12) gemäß einer variablen Zielgröße für eine aktuelle Betriebsart des ersten Haupttriebwerks (11) und des zweiten Haupttriebwerks (12) regelt, wobei das Verfahren folgende Schritte aufweist:
Einrichten eines Hilfstriebwerks (21), das dazu bestimmt ist, das Leistungsgetriebe in Bewegung zu setzen,
**gekennzeichnet durch** folgenden Schritt:
Regeln des Hilfstriebwerk (21) gemäß einer konstanten Zielgröße für eine aktuelle Betriebsart des Hilfstriebwerks (21) mit einem Hilfsregelsystem (25), welches unabhängig von dem Hauptregelsystem (15) ist.

18. Verfahren nach Anspruch 17,
**dadurch gekennzeichnet, dass** das Hilfstriebwerk (21) geregelt wird, damit eine Reaktionsfähigkeit des Hilfstriebwerks (21) kleiner als eine Reaktionsfähigkeit der Haupttriebwerke ist.

19. Verfahren nach Anspruch 17,
**dadurch gekennzeichnet, dass** das Hilfstriebwerk (21) in Abhängigkeit entweder von einer festen Leistungszielgröße oder von einer festen Kraftstoffdurchsatzzielgröße geregelt wird, wenn das Hilfstriebwerk ein Verbrennungsmotor ist.

20. Verfahren nach Anspruch 17,
**dadurch gekennzeichnet, dass**, wenn das Hilfstriebwerk (21) eine maximale Leistung entwickelt, die nicht ausreicht, um die Drehflügel (2) am Boden auf eine Überdrehzahl zu bringen:
- beim Start des Luftfahrzeugs (1) das Hilfstriebwerk (21) und die Haupttriebwerke (11, 12) am Boden in Betrieb genommen werden, um die Drehflügel (2) anzutreiben,
- wenn das Luftfahrzeug (1) im Flug eine Fluggeschwindigkeit entwickelt, die größer als ein Fluggeschwindigkeitsschwellenwert ist, oder wenn die Drehflügel einen Rotationsgeschwindigkeitsschwellenwert überschreiten, und/oder wenn die für den Antrieb der Drehflügel erforderliche Leistung kleiner ist als die verfügbare Leistung, die von dem Hilfstriebwerk geliefert wird, das Hilfstriebwerk (21) blockiert wird.

21. Verfahren nach Anspruch 17,
**dadurch gekennzeichnet, dass**, wenn das Hilfstriebwerk (21) eine maximale Leistung entwickelt, die ausreicht, um die Drehflügel (2) auf eine Überdrehzahl zu bringen:
- am Boden die Haupttriebwerke für den Antrieb der Drehflügel in Betrieb genommen werden und das Hilfstriebwerk blockiert wird,
- im Flug, wenn das Luftfahrzeug mit einer Fluggeschwindigkeit fliegt, die kleiner ist als ein Geschwindigkeitsschwellenwert, und wenn die Rotationsgeschwindigkeit der Drehflügel kleiner ist als ein Rotationsgeschwindigkeitsschwellenwert, und/oder wenn die für den Antrieb der Drehflügel notwendige Leistung größer ist als die verfügbare Leistung, die von dem Hilfstriebwerk geliefert wird, das Hilfstriebwerk nicht mehr blockiert wird.

## Claims

1. Aircraft (1) provided with a rotary wing (2) and at least one power transmission gearbox (5) for driving in rotation said rotary wing (2), said aircraft (1) comprising a first main engine (11) and a second main engine (12) which are suitable for setting in motion said power transmission gearbox (5), said aircraft (1) being provided with a main regulation system (15) suitable for regulating the first main engine (11) and the second main engine (12) according to a variable setpoint for a current use regimen of the first main engine (11) and of the second main engine (12), said aircraft (1) being provided with a secondary engine (21) suitable for setting in motion said power transmission gearbox (5), said aircraft (1) having a secondary regulation system (25),
**characterised in that** said secondary regulation system (25) is suitable for regulating the secondary engine (21) according to a constant setpoint for a current use regimen of the secondary engine (21), said secondary regulation system (25) being independent of said main regulation system (15).

2. Aircraft according to claim 1,
**characterised in that** said main regulation system (15) comprises a first main control unit (16) for controlling the first main engine (11) and a second main control unit (17) for controlling the second main engine (12), the first main control unit (16) communicating with the second main control unit (17), said secondary regulation system (25) comprising a secondary control unit (26) for controlling the secondary engine (21), said secondary control unit (26) having no connection with the main control units (16, 17).

3. Aircraft according to any one of claims 1 to 2,
**characterised in that** a freewheel (31, 32, 41) or a clutch (31', 32', 41') is interposed between each engine (11, 12, 21) and said power transmission gearbox (5).

4. Aircraft according to any one of claims 1 to 3,
**characterised in that** said secondary engine (21) has a reactivity lower than a reactivity of the main engines (11, 12).

5. Aircraft according to any one of claims 1 to 4,
**characterised in that** said main engines (11, 12) are identical, the secondary engine (21) being different from said main engines (11, 12).

6. Aircraft according to claim 5,
**characterised in that** said power transmission gearbox (5) comprising a plurality of reduction stages (5', 5"), said main engines (11, 12) are connected to a first reduction stage (5') for reduction of a rotational speed, said secondary engine (21) being connected to a second reduction stage (5") for reduction of a rotational speed.

7. Aircraft according to any one of claims 1 to 6,
**characterised in that** each main engine (11, 12) comprises a single emergency operation regimen.

8. Aircraft according to any one of claims 1 to 7,
**characterised in that** said secondary engine (21) comprises at least two operation regimens, each regulated in accordance with a constant setpoint.

9. Aircraft according to any one of claims 1 to 8,
**characterised in that**, said constant setpoint is either a fixed power setpoint or a fixed fuel flow rate setpoint when said secondary engine is a heat engine.

10. Aircraft according to any one of claims 1 to 9,
**characterised in that** said aircraft comprises a deactivation means (50) for deactivating said secondary engine (21).

11. Aircraft according to any one of claims 1 to 10,
**characterised in that** said secondary engine (21) develops a maximum power insufficient for putting said rotary wing (2) into overspeed when on the ground.

12. Aircraft according to any one of claims 1 to 11,
**characterised in that**, said secondary engine (21) developing a maximum power sufficient for putting said rotary wing (2) into overspeed, said aircraft (1) comprises a detection means (70) for detecting whether the aircraft is on the ground, said aircraft having an inhibiting means inhibiting said secondary engine on the ground.

13. Aircraft according to any one of claims 1 to 12,
**characterised in that** the aircraft may comprise a detection system for detecting whether the aircraft has a forward speed greater than a threshold forward speed and/or whether the rotary wing exceeds a threshold rotational speed, said aircraft having an inhibiting means inhibiting the secondary engine when the aircraft has a forward speed greater than a threshold forward speed and/or when the rotary wing exceeds a threshold rotational speed and/or when the power necessary for driving the rotary wing is less than the available power delivered by the secondary engine.

14. Aircraft according to claim 12 or claim 13,
**characterised in that** said inhibiting means comprises a braking means (60) for braking said secondary engine.

15. Aircraft according to claim 12 or claim 13,
**characterised in that**, a freewheel (41) being interposed between said secondary engine (21) and said power transmission gearbox (5), said inhibiting means comprises a means for causing the idling or stopping of said secondary engine.

16. Aircraft according to claim 12 or claim 13,
**characterised in that**, a clutch (41') being interposed between said secondary engine (21) and said power transmission gearbox (5), said inhibiting means comprises a means for disengaging said clutch.

17. Method for driving in rotation a power transmission gearbox (5) setting in rotation of a rotary wing (2) of an aircraft (1), said aircraft (1) comprising a first main engine (11) and a second main engine (12) setting in motion said power transmission gearbox (5), said aircraft (1) being provided with a main regulation system (15) regulating the first main engine (11) and the second main engine (12) according to a variable setpoint for a current use regimen of the first main engine (11) and of the second main engine (12), the method having the following steps:
a secondary engine (21) intended to set in motion said power transmission gearbox (5) is arranged, **characterised by** the following step:
the secondary engine (21) is regulated according to a constant setpoint for a current use regimen of the secondary engine (21) with a secondary regulation system (25) which is independent of said main regulation system (15).

18. Method according to claim 17,
**characterised in that** the secondary engine (21) is regulated so that a reactivity of the secondary engine (21) is lower than a reactivity of the main engines.

19. Method according to claim 17,
**characterised in that** the secondary engine (21) is regulated in accordance with either a fixed power setpoint or a fixed fuel flow rate setpoint when said secondary engine is a heat engine.

20. Method according to claim 17,
**characterised in that** said secondary engine (21) developing a maximum power insufficient for putting said rotary wing (2) into overspeed on the ground:
- on starting the aircraft (1), the secondary engine (21) and the main engines (11, 12) are put into operation on the ground in order to drive the rotary wing (2),
- when the aircraft (1) is flying at a forward speed greater than a threshold forward speed or when the rotary wing exceeds a threshold rotational speed and/or when the power necessary for driving the rotary wing is less than the available power delivered by the secondary engine, the secondary engine (21) is inhibited.

21. Method according to claim 17,
**characterised in that**, said secondary engine (21) developing a maximum power sufficient for putting said rotary wing (2) into overspeed:
- on the ground, the main engines are put into operation in order to drive the rotary wing and the secondary engine is inhibited,
- in flight, when the aircraft is flying at a forward speed less than a threshold speed and when the rotational speed of the rotary wing is less than a threshold rotational speed and/or when the power necessary for driving the rotary wing is greater than the available power delivered by the secondary engine, the secondary engine is no longer inhibited.
